# EUROPEAN PATENT SPECIFICATION

(11) **EP 4 087 365 B1**
(45) Date of publication and mention of the grant of the patent: **18.06.2025**
(21) Application number: 20930287.6
(22) Date of filing: 10.04.2020
(51) Int. Cl.: H04W 76/20, H04W 28/06

(54) **DATA TRANSMISSION METHOD AND RELATED DEVICES**
VERFAHREN ZUR DATENÜBERTRAGUNG UND VERBUNDENE GERÄTE
MÉTHODE DE TRANSMISSION DE DONNÉES ET DISPOSITIFS CONNEXES

(43) Date of publication of application: 09.11.2022
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN)
(74) Representative: Mewburn Ellis LLP
(86) International application number: PCT/CN2020/084323
(87) International publication number: WO 2021/203444

(56) References cited:
- WO-A1-2020/031092
- CN-A- 108 401 484
- CN-A- 109 391 639
- US-A1- 2019 253 924
- ERICSSON: "Open issues related to MAC CE for PDCP Duplication", vol. RAN WG2, no. Reno, U.S.; 20191118 - 20191122, 7 November 2019 (2019-11-07), XP051815745, Retrieved from the Internet <URL:https://ftp.3gpp.org/tsg_ran/WG2_RL2/TSGR2_108/Docs/R2-1914761.zip R2-1914761 Open issues related to MAC CE for PDCP duplication.docx> [retrieved on 20191107]
- LG ELECTRONICS INC: "Discussion on PDCP duplication enhancements", vol. RAN WG2, no. E-meeting; 20200224 - 20200306, 11 March 2020 (2020-03-11), XP051864703, Retrieved from the Internet <URL:https://ftp.3gpp.org/tsg_ran/WG2_RL2/TSGR2_109_e/Docs/R2-2002171.zip R2-2002171 [AT109e][037][IIOT] PDCP Duplication Enhancements (LG)_phase2-1_summary.docx> [retrieved on 20200311]
- ERICSSON: "Remaining issues related to MAC CEs for PDCP duplication", vol. RAN WG2, no. Electronic meeting; 20200224 - 20200306, 13 February 2020 (2020-02-13), XP051848602, Retrieved from the Internet <URL:https://ftp.3gpp.org/tsg_ran/WG2_RL2/TSGR2_109_e/Docs/R2-2000798.zip R2-2000798 Remaining issues related to MAC CE for PDCP duplication.docx> [retrieved on 20200213]
- ERICSSON: "MAC CE format design", vol. RAN WG2, no. Prague, Czech Republic; 20190826 - 20190830, 15 August 2019 (2019-08-15), XP051767181, Retrieved from the Internet <URL:http://www.3gpp.org/ftp/tsg_ran/WG2_RL2/TSGR2_107/Docs/R2-1909381.zip> [retrieved on 20190815]
- HUAWEI, ASUSTEK, HISILICON: "Operation for PDCP duplication", 3GPP DRAFT; R2-1800207 OPERATION FOR PDCP DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Vancouver, Canada; 20180122 - 20180126, 12 January 2018 (2018-01-12), Mobile Competence Centre ; 650, route des Lucioles ; F-06921 Sophia-Antipolis Cedex ; France , XP051386077
- HUAWEI, HISILICON: "Configuration and control of packet duplication", 3GPP DRAFT; R2-1706716 CONFIGURATION AND CONTROL OF PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Qingdao, China; 20170627 - 20170629, 17 June 2017 (2017-06-17), Mobile Competence Centre ; 650, route des Lucioles ; F-06921 Sophia-Antipolis Cedex ; France , XP051307086

## Description

### TECHNICAL FIELD

This disclosure relates to the field of communication technology, and particularly to data transmission methods and related devices.

### BACKGROUND

Data radio bearers (DRB) configured for a terminal may support packet data convergence protocol (PDCP) duplication, that is, support PDCP-packet duplication transmission. When PDCP duplication is activated by the terminal, data transmission can be performed via a secondary radio link control (RLC) entity corresponding to a DRB to improve reliability in data transmission. However, a terminal side may be configured with multiple DRBs with different quantities of RLC entities. How to notify the terminal to activate or deactivate a PDCP duplication of a corresponding DRB and/or indicate which secondary RLC transmission entities to activate in order to ensure reliable data transmission has become crucial.

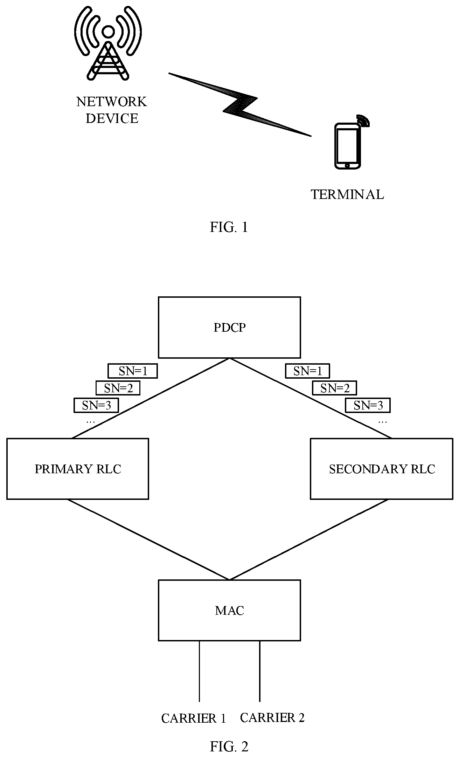

Ericsson: MAC CE format design, 3GPP draft, R2-1909381, propose the following: (1) the MAC CE indicates only 1 DRB, (2) the activation status for the RLC entities is indicated by 3 or 4 bits (depending on the outcome of the primary path), (3) RAN2 to agree on the MAC CE format shown in FIG. 1 (taking into account P2).

Ericsson: Remaining issues related to MAC CEs for PDCP duplication, 3GPP draft, R2-2000798, propose the following: upon reception of a Rel-15 Duplication Activation/Deactivation MAC CE, the MAC entity indicate activation of deactivation of PDCP duplication of the DRB to upper layers.

Ericsson: open issues related to MAC CE for PDCP duplication, 3GPP draft, R2-1914761, propose the following: proposal 5, upon reception of a Rel-15 MAC CE activation/deactivation, all configured RLC entities are activated/deactivated, proposal 6, the MAC CE indicates only 1 DRB and indicates towards which of the four potential associated RLC entities of the DRB PDCP duplication is activated.

LG electronics Inc.: discussion on PDCP duplication enhancements, 3gpp draft, R2-2002171, propose the following: if Rel-15 MAC CE can be used for Rel-16 Duplication configuration, all secondary RLC entities are activated when Rel-15 MAC CE indicates "duplication activation."

### SUMMARY

Aspects of the invention are set out in the appended claims. Implementations of the disclosure provide a data transmission method and related devices, which is conducive to ensuring reliable data transmission.

### BRIEF DESCRIPTION OF THE DRAWINGS

The following will describe the accompanying drawings used for describing implementations or the related art.
FIG. 1 is an architectural diagram of a communication system provided in implementations of the disclosure.
FIG. 2 is a schematic diagram illustrating primary-secondary radio link control (RLC)-based data transmission provided in implementations of the disclosure.
FIG. 3 is a schematic structural diagram of a media access control-control element (MAC CE) provided in implementations of the disclosure.
FIG. 4a is a schematic structural diagram of another MAC CE provided in implementations of the disclosure.
FIG. 4b is a schematic diagram illustrating packet data convergence protocol (PDCP) duplication provided in implementations of the disclosure.
FIG. 5 is a schematic flowchart of a data transmission method provided in implementations of the disclosure.
FIG. 6 is a schematic flowchart of another data transmission method provided in implementations of the disclosure.
FIG. 7a is a schematic interaction diagram of a data transmission method provided in implementations of the disclosure.
FIG. 7b is a schematic structural diagram of a first control message provided in implementations of the disclosure.
FIG. 8a is a schematic interaction diagram of another data transmission method provided in implementations of the disclosure.
FIG. 8b is a schematic structural diagram of another first control message provided in implementations of the disclosure.
FIG. 9a is a schematic interaction diagram of another data transmission method provided in implementations of the disclosure.
FIG. 9b is a schematic structural diagram of a second control message provided in implementations of the disclosure.
FIG. 9c is a schematic structural diagram of another second control message provided in implementations of the disclosure.
FIG. 9d is a schematic structural diagram of another first control message provided in implementations of the disclosure.
FIG. 10 is a schematic interaction diagram of another data transmission method provided in implementations of the disclosure.
FIG. 11 is a schematic interaction diagram of another data transmission method provided in implementations of the disclosure.
FIG. 12 is a schematic interaction diagram of another data transmission method provided in implementations of the disclosure.
FIG. 13 is a schematic structural diagram of a terminal provided in implementations of the disclosure.
FIG. 14 is a schematic structural diagram of a network device provided in implementations of the disclosure.
FIG. 15 is a schematic structural diagram of another terminal provided in implementations of the disclosure.
FIG. 16 is a schematic structural diagram of another network device provided in implementations of the disclosure.

### DETAILED DESCRIPTION

Technical solutions of implementations of the disclosure will be elaborated below with reference to the accompanying drawings.

It can be understood that, technical solutions of the disclosure can be applied to various communication systems, such as a 5^{th} generation (5G) system, a new radio (NR) system, a long term evolution (LTE) system, or a future communication system, etc.

Refer to FIG. 1, which is an architectural diagram of a communication system provided in the disclosure. As illustrated in FIG. 1, the communication system may include one or more network devices 101 and one or more terminals 102. FIG. 1 only illustrates one network device 101 and one terminal 102. Data transmission can be performed between the network device 101 and the terminal 102.

The terminal is configured with one or more data radio bearers (DRB), for example, network side (such as a network device) may configure one or more DRBs for the terminal. The configured DRB(s) may support packet data convergence protocol (PDCP) duplication, that is, a packet of the DRB may be duplicated and transmitted, which is conducive to improving reliability in packet transmission. Each DRB is configured with a primary radio link control (RLC) entity, and a DRB that supports PDCP duplication is configured with a secondary RLC entity, where a possible architecture corresponding thereto is illustrated in FIG. 2. Regardless of whether PDCP-packet duplication transmission (PDCP duplication) is activated for the terminal, a primary RLC entity and its corresponding logical channel are always used for packet transmission. If PDCP duplication is activated for the terminal, a secondary RLC entity and its corresponding logical channel are used for packet transmission. Optionally, different RLC entities may be used for data transmission on different carriers and/or data transmission to different network devices. A DRB may be configured with one secondary RLC entity, or may be configured with multiple (at least two) secondary RLC entities. For example, in release 15 (R15), a DRB is configured with one secondary RLC entity; in an enhanced release, a DRB may be configured with at least two secondary RLC entities. The network side can indicate to activate/deactivate (activate or deactivate) a PDCP duplication in terms of each secondary RLC entity corresponding to a DRB configured for the terminal. The following will take R15 and the enhanced release as examples for illustration.

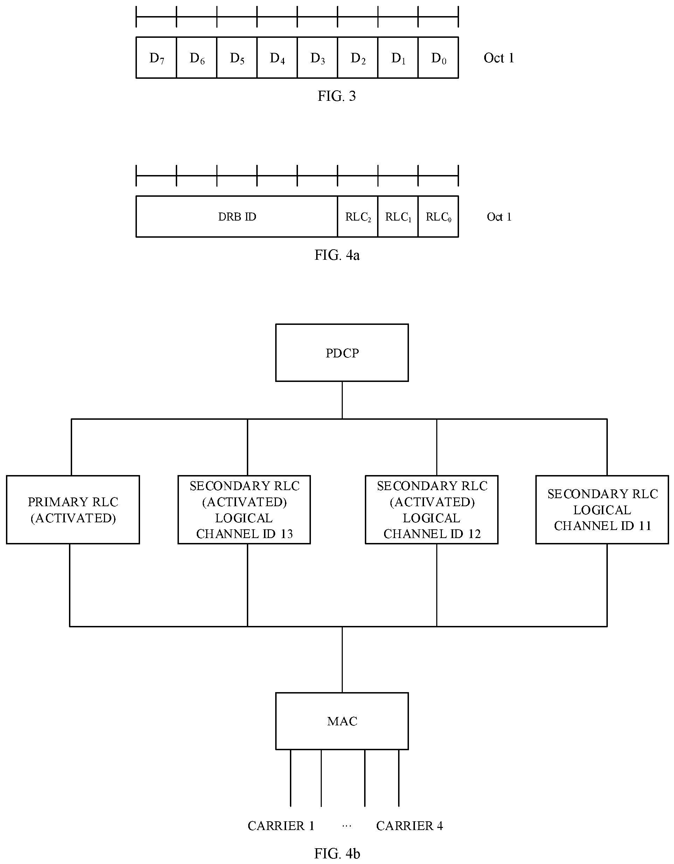

In a transmission enhancement mechanism of R15, refer to FIG. 3, which is a schematic diagram of a payload format of a media access control layer (MAC)-control element (CE) provided in implementations of the disclosure. As illustrated in FIG. 3, a network side may indicate to activate/deactivate a PDCP duplication of a DRB via a duplication activation/deactivation MAC CE illustrated in FIG. 3, where the DRB is configured with one secondary RLC entity. Di may indicate an activation/deactivation status of a PDCP duplication of corresponding DRB i, or referred to as indicating to activate/deactivate the PDCP duplication of corresponding DRB i. Optionally, if Di field is set to "1", it may indicate to activate the PDCP duplication of DRB i, or referred to as indicating that the PDCP duplication of DRB i shall be activated. If Di field is set to "0", it may indicate to deactivate the PDCP duplication of DRB i, or referred to as indicating that the PDCP duplication of DRB i shall be deactivated. In other words, if a corresponding bit is set to 1, the network side notifies a terminal to activate a PDCP duplication of the DRB; on the contrary, if the corresponding bit is set to 0, a network notifies the terminal to deactivate the PDCP duplication of the DRB. Optionally, i may be an ascending order of a DRB identity (ID) among DRBs configured with PDCP duplication. For example, if there are 8 DRBs with IDs = 11, 12, 13, 14, 15, 16, 17, and 18, DRBs 11~18 may correspond to positions 0~7 in the payload in FIG. 3 respectively.

In a transmission mechanism of the enhanced release, refer to FIG. 4a, which is a schematic diagram of a payload format of another MAC CE provided in implementations of the disclosure. The network side may indicate to activate/deactivate a PDCP duplication of a DRB via a duplication RLC activation/deactivation MAC CE illustrated in FIG. 4a, where the DRB is configured with three secondary RLC entities. As illustrated in FIG. 4a, a payload of the duplication RLC activation/deactivation MAC CE contains two parts: a DRB ID and an RLC field. The DRB ID may indicate a DRB that is to be activated/deactivated. The RLC field may indicate information of a secondary RLC entity that is to be activated/deactivated. Optionally, index i of RLC i field may be determined by an ascending order of logical channel ID of secondary RLC entities in master cell group (MCG) and secondary cell group (SCG).

For example, suppose that a DRB with DRB ID of 5 has three secondary RLC entities corresponding thereto, and these RLCs have logical channel IDs = 11, 12, and 13 respectively ("RLC 11, RLC 12, and RLC 13" for short), that is, RLC₀, RLC₁, and RLC₂ correspond to RLC 11, RLC 12, and RLC 13 respectively. When a duplication RLC activation/deactivation MAC CE, which specifies that the DRB ID is 5 and the RLC field is "110", is received by a terminal, as illustrated in FIG. 4b, the terminal can activate a PDCP duplication of each of RLC 12 and RLC 13 on two different carriers for the DRB with DRB ID = 5.

However, a terminal may be configured with various DRBs at the same time in the future, for example, may be configured with both a DRB of a duplication transmission mechanism of one secondary RLC entity and a DRB of a duplication transmission mechanism of more than two secondary RLC entities. In contrast, according to the disclosure, it is possible to indicate PDCP duplications for DRBs configured with various quantities of secondary RLC entities, or indicate PDCP duplication for various DRBs. As such, based on activating or deactivating a PDCP duplication of a corresponding DRB and/or which secondary RLC transmission entities to activate, it is possible to ensure reliable data transmission, thereby realizing activation/deactivation of PDCP duplication for a terminal configured with both a DRB configured with one secondary RLC entity and a DRB configured with more than one secondary RLC entity by enabling a first control message such as R15 duplication activation/deactivation MAC CE or a second control message such as duplication RLC activation/deactivation MAC CE, which will be elaborated respectively below.

In the disclosure, the network device may be an entity for transmitting or receiving information at a network side, which may be, for example, a base station. The base station may be used for communicating with one or more terminals, or may be used for communicating with one or more base stations which have some functions of the terminal (for example, communication between a macro base station and a micro base station). The base station may be an evolutional Node B (eNB) in an LTE system, or may be a gNB in a 5G system or an NR system, or the like, which will not be enumerated herein. Or the network device 101 may also be a transmission point (TP), an access point (AP), a transmission and receiver point (TRP), a relay device, a central unit (CU), or other network devices which have functions of the base station, or the like, and the disclosure is not limited in this regard.

In the disclosure, the terminal is a device that has communication functions and may be, for example, an in-vehicle device, a wearable device, a handheld device (such as smart phone), etc. The terminal may also be called in other names, such as user equipment (UE), subscriber unit, mobile station, mobile unit, terminal device, or the like, and the disclosure is not limited in this regard.

It can be understood that, the communication system illustrated in FIG. 1 is merely an example and does not constitute limitation on the disclosure. Those of ordinary skill in the art can appreciate that, with evolution of network architectures and emergence of new service scenarios, for similar technical problems, the technical solutions provided in the disclosure are also applicable.

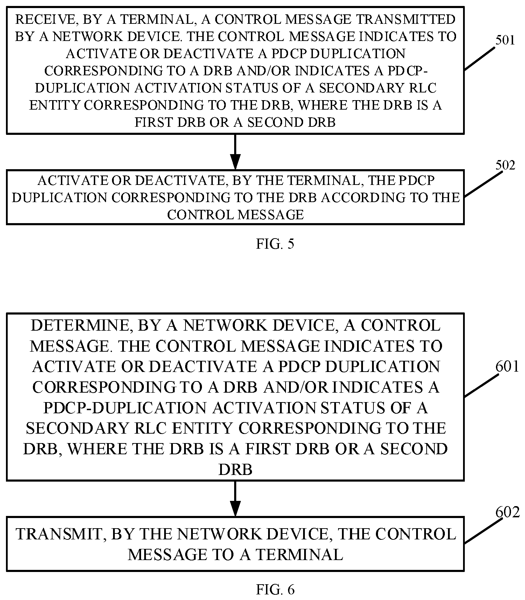

Refer to FIG. 5, which is a schematic flowchart of a data transmission method provided in implementations of the disclosure. The method of implementations herein is applicable to the communication system described above and is specifically applicable to the terminal described above. The terminal is configured with a first DRB and/or a second DRB, where the first DRB corresponds to one secondary RLC entity, and the second DRB corresponds to multiple secondary RLC entities. In other words, the terminal may be configured with one or more types of DRB(s). For example, the terminal may be configured with only a DRB corresponding to one secondary RLC entity, or configured with only a DRB corresponding to multiple secondary RLC entities, or configured with both a DRB corresponding to one secondary RLC entity and a DRB corresponding to multiple secondary RLC entities, where the quantity of each type of DRB may be one or multiple. As illustrated in FIG. 5, the method includes the following.

501, a terminal receives a control message transmitted by a network device. The control message indicates to activate or deactivate a PDCP duplication corresponding to a DRB and/or indicates a PDCP-duplication activation status of a secondary RLC entity corresponding to the DRB, where the DRB is the first DRB or the second DRB.

The control message is a first control message and a second control message. In other words, the network device may indicate, via various control messages, that the terminal activates or deactivates a PDCP duplication corresponding to a DRB. For example, the network device indicates, via the first control message, that the terminal activates or deactivates the PDCP duplication corresponding to the DRB. For another example, the network device indicates, via the second control message, that the terminal activates or deactivates the PDCP duplication corresponding to the DRB. The control message is a MAC CE.

The first control message may contain first indication information for each of one or more DRBs. The first indication information may indicate to activate or deactivate a PDCP duplication corresponding to a DRB, for example, may specifically indicate a PDCP-duplication activation status corresponding to the DRB or a PDCP-duplication activation status of a secondary RLC entity corresponding to the DRB, where the PDCP-duplication activation status may include an activation state or a deactivation state. For example, the first indication information may be bit information. For instance, bit "1" indicates to activate the PDCP duplication corresponding to the DRB, that is, indicates that the PDCP-duplication activation status of the secondary RLC entity corresponding to the DRB is the activation state; and bit "0" indicates to deactivate the PDCP duplication corresponding to the DRB, that is, indicates that the PDCP-duplication activation status of the secondary RLC entity corresponding to the DRB is the deactivation state. Or the first indication information may indicate in other manners. The disclosure is not limited in this regard.

Exemplarily, the second control message may contain a DRB ID and second indication information for each of multiple secondary RLC entities. The second indication information indicates a PDCP-duplication activation status corresponding to a DRB or a PDCP-duplication activation status of at least one secondary RLC entity corresponding to the DRB. The PDCP-duplication activation status may include an activation state or a deactivation state, that is, the PDCP-duplication activation status may indicate to activate or deactivate a corresponding secondary RLC entity. For example, the second indication information may be bit information. For instance, bit "1" indicates to activate the corresponding secondary RLC entity, that is, indicates that the PDCP-duplication activation status of the secondary RLC entity corresponding to the DRB is the activation state; and bit "0" indicates to deactivate the corresponding secondary RLC entity, that is, indicates that the PDCP-duplication activation status of the secondary RLC entity corresponding to the DRB is the deactivation state. Or the second indication information may indicate in other manners. The disclosure is not limited in this regard.

502, the terminal activates or deactivates the PDCP duplication corresponding to the DRB according to the control message.

After obtaining the control message indicating to activate or deactivate the PDCP duplication corresponding to the DRB and/or indicates the PDCP-duplication activation status corresponding to the DRB, the terminal can activate or deactivate the PDCP duplication corresponding to the DRB according to the control message. Optionally, "activate or deactivate the PDCP duplication corresponding to the DRB" may refer to activating or deactivating the PDCP duplication of the DRB, or activating or deactivating the PDCP duplication of the secondary RLC entity corresponding to the DRB.

In a possible design, the one or more DRBs corresponding to the first control message may be the first DRB, that is, the first control message may be indicative only for a DRB(s) configured with one secondary RLC entity. The first control message contains first indication information for a DRB(s) configured with one secondary RLC entity, but does not contain first indication information for a DRB(s) configured with more than one secondary RLC entity. Optionally, a bit(s) in the first control message such as MAC CE corresponds to a DRB(s) with one secondary RLC entity. These DRB IDs may be arranged in an ascending order or in a descending order, and the disclosure is not limited in this regard.

For example, suppose that the terminal is configured with 15 DRBs, where DRBs with IDs = 1, 3, 5, 7, 9, 11, 13, and 15 are DRBs configured with more than one secondary RLC entity, and DRBs with IDs = 2, 4, 6, 8, 10, 12, 14, and 16 are DRBs configured with one secondary RLC entity. The first control message such as R15 duplication activation/deactivation MAC CE is only intended for the DRBs with IDs = 2, 4, 6, 8, 10, 12, 14, and 16, that is, contains first indication information for the DRBs with IDs = 2, 4, 6, 8, 10, 12, 14, and 16. After receiving the first control message, the terminal can activate or deactivate a PDCP duplication corresponding to each of the DRBs with IDs = 2, 4, 6, 8, 10, 12, 14, and 16 according to the first control message.

In a possible design, bits in the first control message such as MAC CE may contain an indication for a PDCP duplication of each configured DRB and/or an indication for a PDCP duplication of each DRB corresponding to the MAC entity. DRB IDs may be arranged in an ascending order or in a descending order, and the disclosure is not limited in this regard. If the first indication information such as bit corresponds to a DRB configured with more than one secondary RLC entity, the value of the bit can be ignored.

In implementations herein, the terminal can activate or deactivate a PDCP duplication corresponding to a DRB according to a received control message that indicates to activate or deactivate the PDCP duplication corresponding to the DRB and/or indicates the PDCP-duplication activation status corresponding to the DRB, which can realize indication for PDCP duplications of DRBs configured with various quantities of secondary RLC entities, thereby ensuring reliable data transmission.

Refer to FIG. 6, which is a schematic flowchart of another data transmission method provided in implementations of the disclosure. The method of implementations herein is specifically applicable to the network device described above. As illustrated in FIG. 6, the method includes the following.

601, a network device determines a control message. The control message indicates to activate or deactivate a PDCP duplication corresponding to a DRB and/or indicates a PDCP-duplication activation status of a secondary RLC entity corresponding to the DRB, where the DRB is a first DRB or a second DRB.

Optionally, the control message may be a first control message and/or a second control message. In other words, the network device may indicate, via various control messages, that a terminal activates or deactivates a PDCP duplication corresponding to a DRB. For example, the network device indicates, via the first control message, that the terminal activates or deactivates the PDCP duplication corresponding to the DRB. For another example, the network device indicates, via the second control message, that the terminal activates or deactivates the PDCP duplication corresponding to the DRB.

For details of the first control message and the second control message, reference can be made to the related elaborations in the foregoing implementations, which will not be elaborated again herein.

602, the network device transmits the control message to the terminal.

The terminal may be configured with the first DRB and/or the second DRB, where the first DRB corresponds to one secondary RLC entity, and the second DRB corresponds to multiple secondary RLC entities.

After the network device transmits the control message to the terminal, the terminal can receive the control message, thereby activating or deactivating the PDCP duplication corresponding to the DRB based on the control message.

In implementations herein, the network device can transmit to the terminal the control message that indicates to activate or deactivate a PDCP duplication corresponding to a DRB and/or indicates a PDCP-duplication activation status corresponding to the DRB, to command the terminal to activate or deactivate the PDCP duplication of the corresponding DRB. As such, it is possible to realize indication for PDCP duplications of various DRBs, for example, indication for the first DRB, or for another example, indication for the second DRB, or for another example, indication for PDCP duplications of the first DRB and the second DRB via one control message, thereby ensuring reliable data transmission.

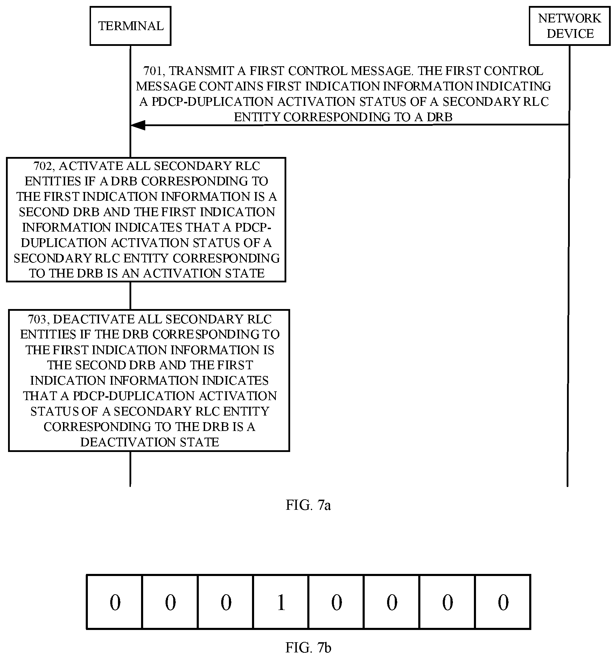

Refer to FIG. 7a, which is a schematic interaction diagram of a data transmission method provided in implementations of the disclosure. In implementations herein, a network device can transmit a first control message to a terminal, to indicate activation or deactivation of a PDCP duplication corresponding to a second DRB configured with multiple secondary RLC entities. As illustrated in FIG. 7a, the method includes the following.

701, a network device transmits a first control message to a terminal. The first control message may contain first indication information indicating a PDCP-duplication activation status of a secondary RLC entity corresponding to a DRB.

For example, the first control message may be the payload format of the R15 duplication activation/deactivation MAC CE described above.

702, if a DRB corresponding to the first indication information is the second DRB and the first indication information indicates that a PDCP-duplication activation status of a secondary RLC entity corresponding to the DRB is an activation state, the terminal activates all of the multiple secondary RLC entities.

If a DRB corresponding to some first indication information in the first control message is the second DRB, that is, a DRB configured with multiple secondary RLC entities (for example, 3 secondary RLC entities, or for another example, 4 secondary RLC entities, etc.), and the first indication information indicates to activate a PDCP duplication corresponding to the DRB (for example, a bit corresponding to the DRB is "1"), it indicates that all secondary RLC entities corresponding to the DRB will be activated. As such, the terminal can activate all secondary RLC entities configured for the DRB.

703, if the DRB corresponding to the first indication information is the second DRB and the first indication information indicates that a PDCP-duplication activation status of a secondary RLC entity corresponding to the DRB is a deactivation state, the terminal deactivates all of the multiple secondary RLC entities.

Optionally, if a DRB corresponding to some first indication information in the first control message is the second DRB, that is, a DRB configured with multiple secondary RLC entities, and the first indication information indicates to deactivate a PDCP duplication corresponding to the DRB (for example, a bit corresponding to the DRB is "0"), it indicates that all secondary RLC entities corresponding to the DRB shall be deactivated. As such, the terminal can deactivate all secondary RLC entities configured for the DRB.

For example, suppose that the terminal is configured with 8 DRBs with IDs = 1, 2, 3, 4, 5, 6, 7, and 8. The first control message transmitted to the terminal by the network device is illustrated in FIG. 7b. DRBs 1~8 correspond to positions 0~7 in a payload in FIG. 7b (suppose from left to right) respectively, and bits (first indication information) corresponding to positions 0~7 are 00010000 respectively. This indicates that a PDCP duplication of a DRB with DRB ID = 5 will be activated and PDCP duplications of other DRBs will be deactivated. If DRB 5 is configured with three secondary RLC entities, the three secondary RLC entities can be activated, thereby realizing the PDCP duplication of DRB 5.

In implementations herein, the network device transmits the first control message to the terminal, to indicate activation or deactivation of a PDCP duplication corresponding to the second DRB configured with multiple secondary RLC entities, such that the terminal can activate or deactivate the PDCP duplication corresponding to the second DRB based on the first control message, thereby ensuring reliable data transmission.

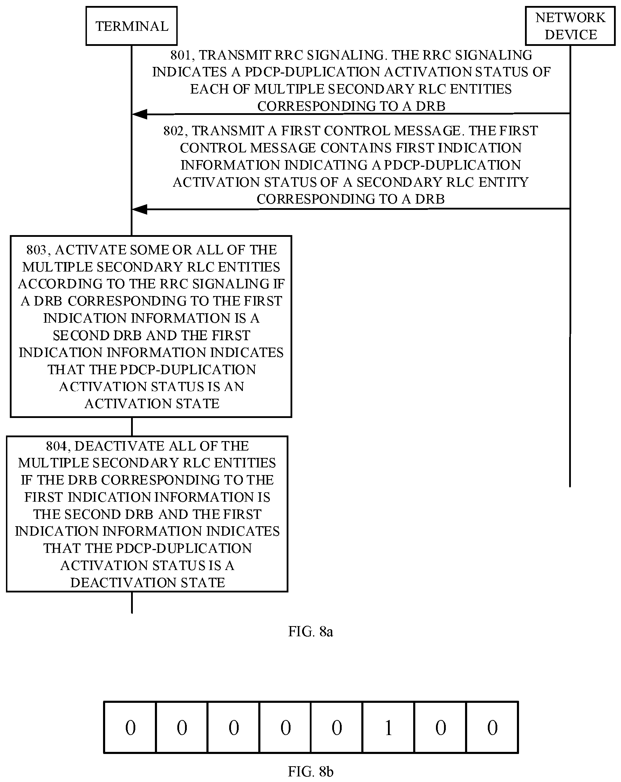

Refer to FIG. 8a, which is a schematic interaction diagram of a data transmission method provided in implementations of the disclosure. In implementations herein, a network device can transmit RRC signaling and a first control message to a terminal, to indicate activation or deactivation of a PDCP duplication corresponding to a second DRB configured with multiple secondary RLC entities. As illustrated in FIG. 8a, the method includes the following.

801, a network device transmits RRC signaling to a terminal. The RRC signaling indicates a PDCP-duplication activation status of each of multiple secondary RLC entities corresponding to a DRB.

The network device may indicate a PDCP-duplication activation status, that is, activation initial state, of at least one secondary RLC entity via an indication message such as RRC signaling, such that the terminal can activate or deactivate the PDCP duplication corresponding to the second DRB according to the RRC signaling. Optionally, the RRC signaling may be obtained through dynamic configuration or through semi-static configuration, etc., and the disclosure is not limited in this regard.

802, the network device transmits a first control message to the terminal. The first control message contains first indication information indicating a PDCP-duplication activation status of a secondary RLC entity corresponding to a DRB.

803, if a DRB corresponding to the first indication information is the second DRB and the first indication information indicates that the PDCP-duplication activation status is an activation state, the terminal activates some or all of the multiple secondary RLC entities according to the RRC signaling.

If a DRB corresponding to some first indication information in the first control message is the second DRB, that is, a DRB configured with multiple secondary RLC entities, and the first indication information indicates to activate a PDCP duplication corresponding to the DRB (for example, a bit corresponding to the DRB is "1"), the terminal can activate a secondary RLC entity (entities) configured for the DRB according to a PDCP-duplication activation status indicated by the RRC signaling. For example, the second DRB is configured with three secondary RLC entities, and a PDCP-duplication activation status of each of the three secondary RLC entities indicated by the RRC signaling is activation, deactivation, and activation respectively, for instance, the activation status is indicated by "101". As such, after receiving the first control message indicating to activate the PDCP duplication corresponding to the second DRB, the terminal can activate two secondary RLC entities corresponding to "1" in order for PDCP duplication.

804, if the DRB corresponding to the first indication information is the second DRB and the first indication information indicates that the PDCP-duplication activation status is a deactivation state, the terminal deactivates all of the multiple secondary RLC entities.

Optionally, if a DRB corresponding to some first indication information in the first control message is the second DRB configured with multiple secondary RLC entities, and the first indication information indicates to deactivate a PDCP duplication corresponding to the DRB (for example, a bit corresponding to the DRB is "0"), the terminal can deactivate all the secondary RLC entities corresponding to the second DRB.

For example, suppose that the terminal is configured with 8 DRBs with IDs = 1, 2, 3, 4, 5, 6, 7, and 8. The first control message transmitted to the terminal by the network device is illustrated in FIG. 8b. DRBs 1~8 correspond to positions 0~7 in a payload in FIG. 8b (suppose from left to right) respectively, and bits (first indication information) corresponding to positions 0~7 are 00000100 respectively. This indicates that a PDCP duplication of a DRB with DRB ID = 3 will be activated and PDCP duplications of other DRBs will be deactivated. Suppose that DRB 3 is configured with three secondary RLC entities such as RLCs 1~3, and the RRC signaling that was previously transmitted to the terminal by the network device indicates that a secondary RLC entity (entities) which is to be activated among the three secondary RLC entities is RLC 1 and RLC 3, then RLC 1 and RLC 3 can be activated in order for PDCP duplication of DRB 3.

In implementations herein, the network device can transmit the first control message and the RRC signaling to the terminal, to indicate activation or deactivation of the PDCP duplication corresponding to the second DRB configured with multiple secondary RLC entities, thereby ensuring reliable data transmission.

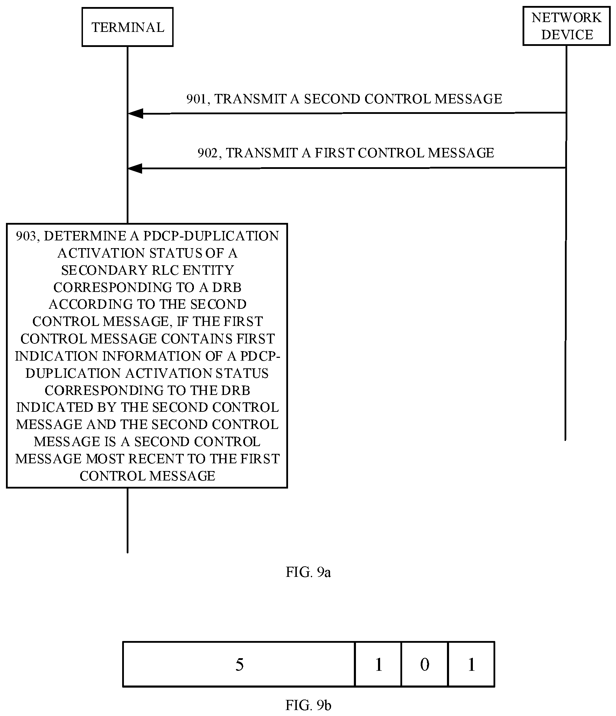

Refer to FIG. 9a, which is a schematic interaction diagram of another data transmission method provided in implementations of the disclosure. In implementations herein, a network device transmits a second control message and a first control message to a terminal, to indicate activation or deactivation of a PDCP duplication corresponding to a second DRB configured with multiple secondary RLC entities. As illustrated in FIG. 9a, the method includes the following.

901, a network device transmits a second control message to a terminal.

The second control message contains second indication information indicating a PDCP-duplication activation status. For example, the second control message contains second indication information indicating an activation state.

Optionally, the second control message may be a MAC CE or RRC signaling. For example, a format of the second control message may be the payload format of the duplication activation/deactivation MAC CE in the enhanced release described above. The terminal can receive the second control message.

902, the network device transmits a first control message to the terminal.

The terminal can receive the first control message. The first control message may indicate a PDCP-duplication activation status of a secondary RLC entity corresponding to a DRB.

903, if the first control message contains first indication information of a PDCP-duplication activation status corresponding to a DRB indicated by the second control message, and the second control message is a second control message most recent to the first control message, the terminal determines a PDCP-duplication activation status of a secondary RLC entity corresponding to the DRB according to the second control message.

Optionally, if the first control message contains first indication information of a PDCP-duplication activation status corresponding to a DRB indicated by the second control message, and the second control message is such second control message, which is most recent to the first control message and contains the second indication information indicating the activation state, the terminal can also determine a PDCP-duplication activation status of a secondary RLC entity corresponding to the DRB according to the second control message.

In other words, when the first control message is received by the terminal, upon determining that the first control message and the second control message each contain an indication for a PDCP duplication of the same DRB, and the second control message contains second indication information that indicates to activate a secondary RLC entity, for example, not all second indication information contained in the second control message is 0, the terminal can determine a PDCP-duplication activation status corresponding to the DRB according to the second control message, to activate a corresponding secondary RLC entity, thereby realizing a PDCP duplication of the DRB. Optionally, after the second control message is received by the terminal, the terminal may also start a timer. If the first control message described above is received before the timer expires, the terminal can determine a PDCP-duplication activation status of a secondary RLC entity corresponding to the DRB according to the second control message. In other words, activation or deactivation of PDCP duplication may also be implemented based on a timer. Otherwise, the corresponding PDCP duplication can be deactivated.

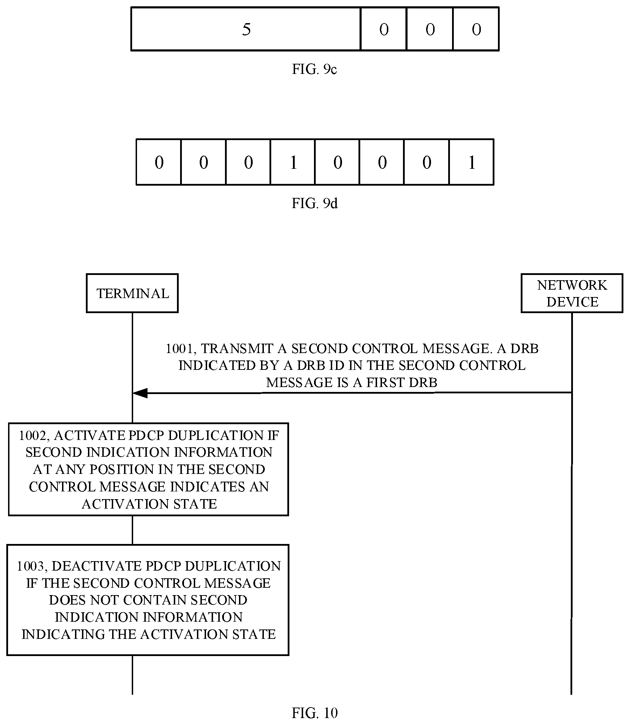

For example, suppose that the terminal is configured with 8 DRBs with IDs = 1, 2, 3, 4, 5, 6, 7, and 8, where DRB 5 is configured with three secondary RLC entities, namely RLCs 1~3. A second control message transmitted to the terminal by the network device is illustrated in FIG. 9b, which is indicative for a PDCP duplication of DRB 5. A PDCP-duplication activation status corresponding to DRB 5 is "101", which indicates to activate RLC 1 and RLC 3. Then the network device transmits another second control message to the terminal, as illustrated in FIG. 9c, which is still indicative of the PDCP duplication of DRB 5. The PDCP-duplication activation status corresponding to DRB 5 is all "0", which indicates to deactivate all the secondary RLC entities. Then the network device further transmits a first control message to the terminal, as illustrated in FIG. 9d. A bit corresponding to DRB 5 in the first control message is "1", which indicates to activate the PDCP duplication corresponding to DRB 5. As such, the terminal can activate RLC 1 and RLC 3 in order for the PDCP duplication of DRB 5.

In implementations herein, the network device can transmit the first control message and the second control message to the terminal, to indicate activation or deactivation of the PDCP duplication corresponding to the second DRB configured with multiple secondary RLC entities. As such, the terminal can activate or deactivate the PDCP duplication corresponding to the second DRB according to the first control message and the second control message, thereby ensuring reliable data transmission.

Refer to FIG. 10, which is a schematic interaction diagram of a data transmission method provided in implementations of the disclosure. In implementations herein, a network device can transmit a second control message to a terminal, to indicate activation or deactivation of a PDCP duplication corresponding to a first DRB configured with one secondary RLC entity. As illustrated in FIG. 10, the method includes the following.

1001, a network device transmits a second control message to a terminal. A DRB indicated by a DRB ID in the second control message is the first DRB.

In implementations herein, suppose that the DRB ID in the second control message is an ID of the first DRB, that is, an ID of a DRB configured with one secondary RLC entity. The second control message may contain multiple second indication information, where each second indication information corresponds to one secondary RLC entity. The second indication information may indicate a PDCP-duplication activation status corresponding to a DRB, where the PDCP-duplication activation status may contain information of a secondary RLC entity that is to be activated or deactivated, that is, the PDCP-duplication activation status may indicate to activate or deactivate the corresponding secondary RLC entity.

1002, if second indication information at any position in the second control message indicates an activation state, a PDCP duplication of the DRB will be activated.

If the DRB indicated by the second control message is the first DRB, that is, a DRB configured with one secondary RLC entity, and the second control message contains second indication information indicating to activate a secondary RLC entity (for example, a PDCP-duplication activation status indicated by the second indication information is "1"), that is, second indication information at any position in the second control message indicates to activate a secondary RLC entity, it indicates that PDCP duplication will be activated. As such, the terminal can activate a secondary RLC entity configured for the DRB.

For example, the second control message is a duplication RLC activation/deactivation MAC CE. When controlling, via the duplication RLC activation/deactivation MAC CE, an indication for a PDCP duplication corresponding to a DRB configured with one secondary RLC entity, if at least one bit in an RLC field in a payload of the duplication RLC activation/deactivation MAC CE is set to 1, it indicates that a PDCP-duplication activation status corresponding to the DRB is 1. As such, the terminal can activate and use the one secondary RLC entity in order for PDCP duplication.

1003, if the second control message does not contain second indication information indicating the activation state, the PDCP duplication of the DRB will be deactivated.

On the contrary, if the second control message does not contain second indication information indicating to activate a secondary RLC entity, for example, all bits in an RLC field are 0, the terminal deactivates PDCP duplication, that is, deactivates the one secondary RLC entity.

Optionally, in terms of activating or deactivating the PDCP duplication corresponding to the DRB according to the second control message, the terminal can also determine whether to activate the PDCP duplication by determining whether second indication information at a specified position indicates to activate a secondary RLC entity or indicates to deactivate a secondary RLC entity, while other positions are ignored. The specified position may be a first position, or a middle position, or a last position, etc., and the disclosure is not limited in this regard. For example, if second indication information at the specified position in the second control message indicates to activate a secondary RLC entity, the PDCP duplication will be activated; or if the second indication information at the specified position in the second control message indicates to deactivate the corresponding secondary RLC entity, the PDCP duplication will be deactivated. As such, it is possible to determine whether to activate the one secondary RLC entity according to a PDCP-duplication activation status at the specified position.

In implementations herein, the network device can transmit the second control message to the terminal, to indicate activation or deactivation of the PDCP duplication corresponding to the first DRB configured with one secondary RLC entity. As such, the terminal can activate or deactivate the PDCP duplication corresponding to the first DRB according to the second control message, thereby ensuring reliable data transmission.

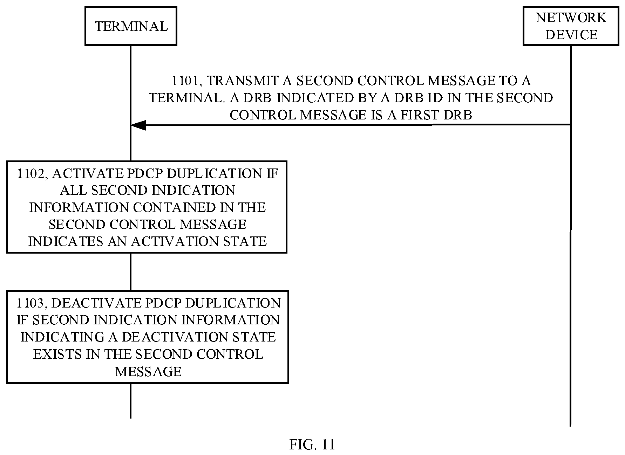

Refer to FIG. 11, which is a schematic interaction diagram of a data transmission method provided in implementations of the disclosure. In implementations herein, a network device can transmit a second control message to a terminal, to indicate activation or deactivation of a PDCP duplication corresponding to a first DRB configured with one secondary RLC entity. As illustrated in FIG. 11, the method includes the following.

1101, a network device transmits a second control message to a terminal. A DRB indicated by a DRB ID in the second control message is the first DRB.

1102, if all second indication information contained in the second control message indicates an activation state, a PDCP duplication of the DRB will be activated.

If a DRB indicated by the second control message is the first DRB, that is, a DRB configured with one secondary RLC entity, and all the second indication information contained in the second control message indicates to activate a secondary RLC entity (for example, PDCP-duplication activation statuses indicated by all the second indication information are "1"), it indicates that PDCP duplication will be activated. As such, the terminal can activate a secondary RLC entity configured for the DRB.

1103, if second indication information indicating a deactivation state exists in the second control message, the PDCP duplication of the DRB will be deactivated.

Optionally, if second indication information indicating to deactivate a secondary RLC entity exists in the second control message (for example, a PDCP-duplication activation status indicated by some second indication information is "0"), it indicates that PDCP duplication will be deactivated. As such, the terminal can deactivate a secondary RLC entity configured for the DRB.

For example, the second control message is a duplication RLC activation/deactivation MAC CE. When controlling, via the duplication RLC activation/deactivation MAC CE, an indication for a PDCP duplication corresponding to a DRB configured with one secondary RLC entity, if all bits in a payload of the duplication RLC activation/deactivation MAC CE are set to 1, it indicates that a PDCP-duplication activation status of the DRB is 1, and the terminal activates and uses the one secondary RLC entity in order for PDCP duplication. Otherwise, it indicates that the PDCP-duplication activation status of the DRB is 0, and the terminal deactivates the PDCP duplication.

In implementations herein, the network device can transmit the second control message to the terminal, to indicate activation or deactivation of the PDCP duplication corresponding to the first DRB configured with one secondary RLC entity. In this way, the terminal can activate or deactivate the PDCP duplication corresponding to the first DRB according to the second control message, thereby ensuring reliable data transmission.

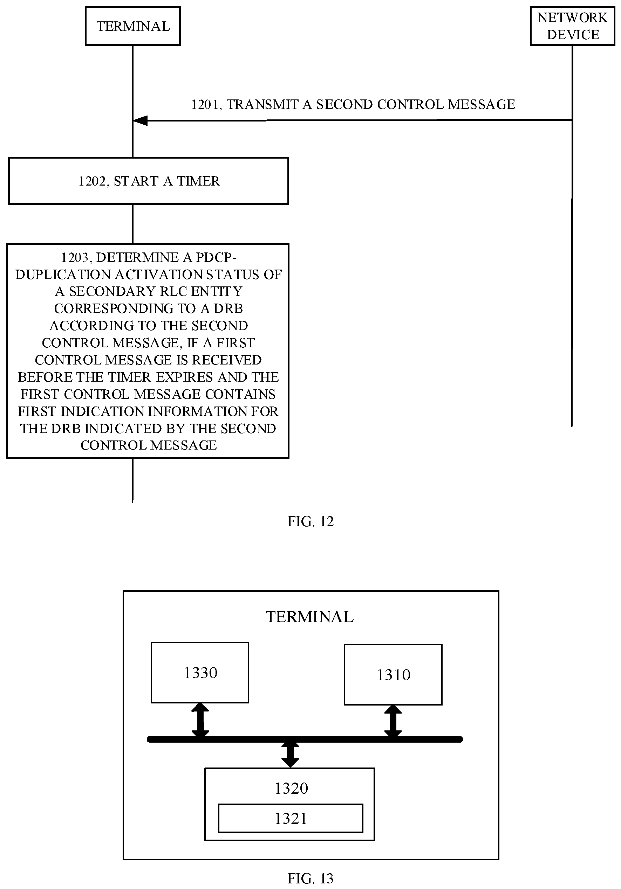

FIG. 12 is a schematic interaction diagram of a data transmission method provided in implementations of the disclosure. In implementations herein, a network device can transmit a second control message and a first control message to a terminal, to indicate activation or deactivation of a PDCP duplication corresponding to a second DRB configured with multiple secondary RLC entities. As illustrated in FIG. 12, the method includes the following.

1201, a network device transmits a second control message to a terminal.

Optionally, the second control message may indicate a PDCP-duplication activation status corresponding to a DRB or a PDCP-duplication activation status of a secondary RLC entity corresponding to the DRB. For example, the second control message indicates the PDCP-duplication activation status of a secondary RLC entity corresponding to the DRB.

1202, start a timer.

Optionally, the terminal can receive the second control message transmitted by the network device and start the timer. The timer may be pre-set or notified dynamically or semi-statically by a network side, etc. There is no limitation on the manner of determining the timer in the disclosure.

1203, if a first control message is received before the timer expires, and the first control message contains first indication information for a DRB indicated by the second control message, a PDCP-duplication activation status corresponding to the DRB is determined according to the second control message.

In other words, if the first control message is received by the terminal before the timer expires, upon determining that the first control message and the second control message each contain an indication for a PDCP duplication corresponding to the same DRB, the terminal can determine, according to the second control message, a PDCP-duplication activation status corresponding to the DRB or a PDCP-duplication activation status of a secondary RLC entity corresponding to the DRB, for example, determine the PDCP-duplication activation status corresponding to the DRB according to the second control message. Optionally, the second control message may be a MAC CE or RRC signaling.

Optionally, if the first control message is received after the timer expires, the terminal can activate or deactivate the PDCP duplication corresponding to the DRB according to the first control message.

As an example, the first control message is a duplication activation/deactivation MAC CE, and the second control message is a duplication RLC activation/deactivation MAC CE. After a duplication RLC activation/deactivation MAC CE for a DRB (for example, the DRB ID is 10, and hereinafter "DRB 10" for short) is received by the terminal, suppose that duplication activation/deactivation MAC CEs for some other DRBs configured with one secondary RLC entity are subsequently received from the network side and these MAC CEs also contain DRB 10 above when in an ascending order, for example, a corresponding bit in a duplication activation/deactivation MAC CE is set to 0 or 1 but an indication for DRB 10 by the bit may be inconsistent with the indication by the previously configured duplication RLC activation/deactivation MAC CE. In this case, the terminal can start the timer after a duplication RLC activation/deactivation MAC CE for some DRB is received, and still follow a result of the duplication RLC activation/deactivation MAC CE when a duplication activation/deactivation MAC CE is received before the timer expires, that is, determine a PDCP-duplication activation status corresponding to the DRB still according to the duplication RLC activation/deactivation MAC CE, thereby determining to activate or deactivate a corresponding secondary RLC entity.

In implementations herein, the terminal can determine with the timer whether to activate/deactivate a PDCP duplication corresponding to a DRB according to the first control message received or to activate/deactivate the PDCP duplication corresponding to the DRB according to the second control message, thereby ensuring reliable data transmission.

It can be understood that, the foregoing method implementations are examples of the data transmission method of the disclosure. The elaboration of each implementation has its own emphasis. For the parts not elaborated in one implementation, reference may be made to related elaborations in other implementations.

Refer to FIG. 13, which is a schematic structural diagram of a terminal provided in implementations of the disclosure. As illustrated in FIG. 13, the terminal 1300 includes a processor 1310, a memory 1320, a communication interface 1330, and one or more programs 1321. The one or more programs 1321 are stored in the memory 1320 and configured to be executed by the processor 1310. The terminal is configured with a first DRB and/or a second DRB, where the first DRB corresponds to one secondary RLC entity and the second DRB corresponds to multiple secondary RLC entities. The programs include instructions used for performing the following steps. A control message transmitted by a network device is received via the communication interface 1330, where the control message indicates to activate or deactivate a PDCP duplication corresponding to a DRB and/or indicates a PDCP-duplication activation status of a secondary RLC entity corresponding to the DRB, and the DRB is the first DRB or the second DRB. The PDCP duplication corresponding to the DRB will be activated or deactivated according to the control message.

Optionally, the control message is a first control message and/or a second control message. The first control message contains first indication information for each of one or more DRBs, and the second control message contains a DRB ID and second indication information for each of multiple secondary RLC entities. The first indication information indicates to activate or deactivate a PDCP duplication corresponding to a DRB, for example, indicates a PDCP-duplication activation status corresponding to the DRB or a PDCP-duplication activation status of a secondary RLC entity corresponding to a DRB, and the second indication information indicates a PDCP-duplication activation status corresponding to a DRB or a PDCP-duplication activation status of at least one secondary RLC entity corresponding to a DRB. The PDCP-duplication activation status includes an activation state or a deactivation state.

Optionally, the control message is the first control message, and in terms of activating the PDCP duplication corresponding to the DRB according to the control message, the instructions in the programs are specifically used for performing the following operations. If a DRB corresponding to the first indication information in the first control message is the second DRB and the first indication information indicates the activation state, all of the multiple secondary RLC entities will be activated. Or if the DRB corresponding to the first indication information in the first control message is the second DRB and the first indication information indicates the deactivation state, all of the multiple secondary RLC entities will be deactivated.

Optionally, the instructions in the programs are further used for performing the following operations. RRC signaling transmitted by the network device is received via the communication interface 1330, where the RRC signaling indicates a PDCP-duplication activation status of each of at least one secondary RLC entity. The control message is the first control message, and in terms of activating or deactivating the PDCP duplication corresponding to the DRB according to the control message, the instructions in the programs are specifically used for performing the following operations. If a DRB corresponding to the first indication information in the first control message is the second DRB and the first indication information indicates the activation state, some or all of the multiple secondary RLC entities will be activated according to the RRC signaling. Or if the DRB corresponding to the first indication information in the first control message is the second DRB and the first indication information indicates the deactivation state, all of the multiple secondary RLC entities will be deactivated.

Optionally, the control message is the second control message, a DRB indicated by the DRB ID is the first DRB, and in terms of activating or deactivating the PDCP duplication corresponding to the DRB according to the control message, the instructions in the programs are specifically used for performing the following operations. If second indication information at any position in the second control message indicates the activation state, the PDCP duplication will be activated. Or if the second control message does not contain second indication information indicating the activation state, the PDCP duplication will be deactivated.

Optionally, in terms of activating or deactivating the PDCP duplication corresponding to the DRB according to the control message, the instructions in the programs are specifically used for performing the following operations. If second indication information at a specified position in the second control message indicates the activation state, the PDCP duplication will be activated. Or if second indication information at a specified position in the second control message indicates the deactivation state, the PDCP duplication will be deactivated.

Optionally, the control message is the second control message, a DRB indicated by the DRB ID is the first DRB, and in terms of activating or deactivating the PDCP duplication corresponding to the DRB according to the control message, the instructions in the programs are specifically used for performing the following operations. If all second indication information contained in the second control message indicates the activation state, the PDCP duplication will be activated. Or if second indication information indicating the deactivation state exists in the second control message, the PDCP duplication will be deactivated.

Optionally, in terms of receiving the control message transmitted by the network device, the instructions in the programs are specifically used for performing the following operations. A first control message transmitted by the network device is received via the communication interface 1330, where the first control message indicates a PDCP-duplication activation status corresponding to a DRB or indicates a PDCP-duplication activation status of a secondary RLC entity corresponding to a DRB. Before receiving the first control message transmitted by the network device, the instructions in the programs are further used for performing the following operations. A second control message transmitted by the network device is received via the communication interface 1330 and a timer is started, where the second control message indicates the PDCP-duplication activation status of the secondary RLC entity corresponding to the DRB or the PDCP-duplication activation status corresponding to the DRB. In terms of activating or deactivating the PDCP duplication corresponding to the DRB according to the control message, the instructions in the programs are specifically used for performing the following operations. If the first control message is received before the timer expires, the PDCP-duplication activation status corresponding to the DRB is determined according to the second control message. Or the PDCP duplication of the secondary RLC entity corresponding to the DRB will be activated or deactivated according to the first control message after the timer expires.

Optionally, in terms of receiving the control message transmitted by the network device, the instructions in the programs are used for performing the following operations. A first control message transmitted by the network device is received via the communication interface 1330, where the first control message indicates a PDCP-duplication activation status corresponding to a DRB or a PDCP-duplication activation status of a secondary RLC entity corresponding to a DRB. Before receiving the control message transmitted by the network device, the instructions in the programs are further used for performing the following operations. A second control message transmitted by the network device is received via the communication interface 1330, where a DRB ID contained in the second control message indicates the DRB. In terms of activating or deactivating the PDCP duplication corresponding to the DRB according to the control message, the instructions in the programs are specifically used for performing the following operations. If the second control message is a second control message most recent to the first control message, the PDCP-duplication activation status of the secondary RLC entity corresponding to the DRB is determined according to the second control message.

Optionally, the first control message contains first indication information for each of one or more DRBs, and the first DRB is the one or more DRBs.

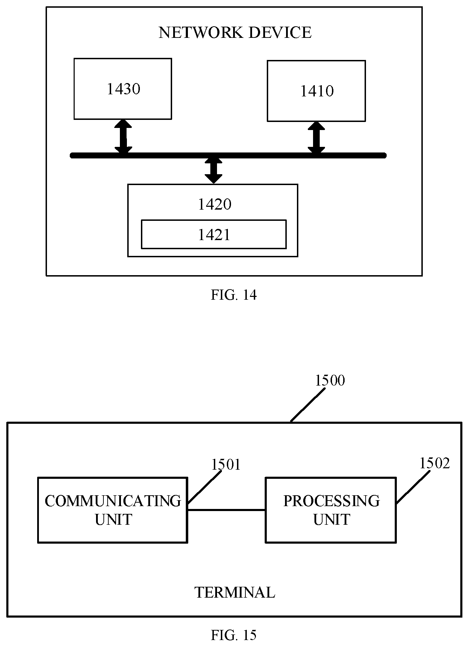

Refer to FIG. 14, which is a schematic structural diagram of a network device provided in implementations of the disclosure. As illustrated in FIG. 14, the network device 1400 includes a processor 1410, a memory 1420, a communication interface 1430, and one or more programs 1421. The one or more programs 1421 are stored in the memory 1420 and configured to be executed by the processor 1410. The programs include instructions used for performing the following operations. A control message is determined, where the control message indicates to activate or deactivate a PDCP duplication corresponding to a DRB and/or indicates a PDCP-duplication activation status of a secondary RLC entity corresponding to the DRB, the DRB is a first DRB or a second DRB, the first DRB corresponds to one secondary RLC entity, and the second DRB corresponds to multiple secondary RLC entities. The control message is transmitted to a terminal via the communication interface 1430.

Optionally, the control message is a first control message and/or a second control message. The first control message contains first indication information for each of one or more DRBs, and the second control message contains a DRB ID and second indication information for each of multiple secondary RLC entities. The first indication information indicates to activate or deactivate a PDCP duplication corresponding to a DRB, for example, indicates a PDCP-duplication activation status corresponding to the DRB or a PDCP-duplication activation status of a secondary RLC entity corresponding to a DRB, and the second indication information indicates a PDCP-duplication activation status of at least one secondary RLC entity corresponding to a DRB or a PDCP-duplication activation status corresponding to a DRB. The PDCP-duplication activation status includes an activation state or a deactivation state.

Optionally, the programs further include instructions used for performing the following operations. RRC signaling is transmitted to the terminal via the communication interface 1430, where the RRC signaling indicates a PDCP-duplication activation status of each of at least one secondary RLC entity.

Optionally, the first control message contains first indication information for each of one or more DRBs, and the first DRB is the one or more DRBs.

Technical solutions of implementations of the disclosure have been elaborated above from the perspective of interaction between various network elements. It can be understood that, in order to implement the above functions, the terminal and the network device include hardware structures and/or software modules for performing respective functions. Division of functional units of the network device and the terminal may be implemented according to the above method implementations in implementations of the disclosure. For example, various functional units may be divided to be in one-to-one correspondence with each function, or two or more functions may be integrated into one processing unit. The integrated unit may be implemented in the form of hardware, or may be implemented in the form of software program module. It is to be noted that, division of units in implementations of the disclosure is illustrative and is only a division of logical functions, and there may exist other manners of division in practice.

Refer to FIG. 15, which is another possible schematic structural diagram of the terminal in the foregoing implementations. As illustrated in FIG. 15, the terminal 1500 may include a communicating unit 1501 and a processing unit 1502. These units can perform corresponding functions of the terminal in the foregoing method implementations. The processing unit 1502 is configured to control and manage operations of the terminal. The communicating unit 1501 is configured to support the terminal to communicate with other devices, for example, to communicate with a network device. The terminal may further include a storage unit 1503. The storage unit 1503 is configured to store program codes and data of the network device.

The processing unit 1502 may be a processor or a controller and may be, for example, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in implementations of the disclosure can be implemented or executed. The processor may also be a combination for implementing computing functions, for example, one or more microprocessors, a combination of DSP and microprocessor, or the like. The communicating unit 1501 may be a transceiver, a transceiver circuit, a radio frequency (RF) chip, etc. The storage unit 1503 may be a memory.

When the processing unit 1501 is a processor, the communicating unit 1502 is a communication interface, and the storage unit 1503 is a memory, the terminal in this embodiment of the disclosure may be the terminal illustrated in FIG. 13.

Optionally, with the above units, the terminal can implement some or all operations performed by the terminal in the methods of implementations illustrated in FIG. 5 and FIG. 12. It should be understood that, this embodiment of the disclosure is apparatus implementations corresponding to the method implementations. Elaborations of the method implementations can also be applied to this embodiment of the disclosure, which will not be elaborated again herein.

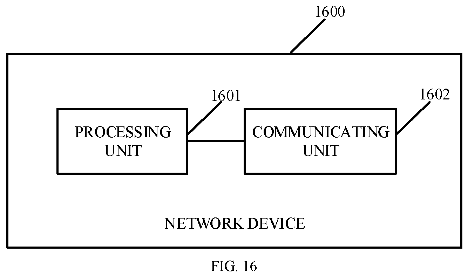

Refer to FIG. 16, which is another possible schematic structural diagram of the network device in the foregoing implementations. As illustrated in FIG. 16, the network device 1600 may include a processing unit 1601 and a communicating unit 1602. These units can perform corresponding functions of the network device in the foregoing method implementations. The processing unit 1601 is configured to control and manage operations of the network device. The communicating unit 1602 is configured to support the network device to communicate with other devices, for example, communicate with a terminal. The network device may further include a storage unit 1603. The storage unit 1603 is configured to store program codes and data of the network device.

The processing unit 1601 may be a processor or a controller. The communicating unit 1602 may be a transceiver, a transceiver circuit, an RF chip, etc. The storage unit 1603 may be a memory.

When the processing unit 1601 is a processor, the communicating unit 1602 is a communication interface, and the storage unit 1603 is a memory, the network device in this embodiment of the disclosure may be the network device illustrated in FIG. 14.

Optionally, with the above units, the network device can implement some or all operations performed by the network device in the methods of implementations illustrated in FIG. 5 and FIG. 12. It should be understood that, this embodiment of the disclosure is apparatus implementations corresponding to the method implementations. Elaborations of the method implementations can also be applied to this embodiment of the disclosure, which will not be elaborated again herein.

The disclosure further provides a communication system. The system includes the terminal and/or the network device described above. Optionally, the system may further include other devices that interact with the above network elements in the technical solutions provided in implementations of the disclosure. The network device and/or the terminal can perform some or all operations of the methods in implementations illustrated in FIG. 5 to FIG. 12. For details thereof, reference can be made to related elaborations in the foregoing implementations, which will not be elaborated again herein.

Implementations of the disclosure further provide a computer-readable storage medium. The computer-readable storage medium is configured to store computer programs used for electronic data interchange (EDI). The computer programs are operable with a computer to perform some or all operations performed by the terminal or the network device described in the foregoing method implementations.

Implementations of the disclosure further provide a computer program product. The computer program product includes a non-transitory computer-readable storage medium storing computer programs. The computer programs are operable with a computer to perform some or all operations performed by the terminal or the network device described in the foregoing method implementations. For example, the computer program product may be a software installation package.

The steps of the method or algorithm described in implementations of the disclosure may be implemented by means of hardware, or may be implemented by executing software instructions by a processor. The software instructions can be implemented by corresponding software modules, which can be stored in a random access memory (RAM), a flash memory, a read only memory (ROM), an erasable programmable ROM (EPROM), an electrically EPROM (EEPROM), registers, hard disk, mobile hard disk, compact disc (CD)-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in a communication device such as the terminal or the network device. The processor and the storage medium may also be present as discrete components in the communication device.

It can be understood that, the "first", "second", "third", and various numerical numbers involved in the disclosure are only intended for distinction for the convenience of illustration, rather than limiting the scope of the implementations of the disclosure. The term "and/or" herein only describes an association relationship between associated objects, which means that there can be three relationships. For example, A and/or B can mean A alone, both A and B exist, and B alone. In addition, the character "/" herein can indicate that the associated objects are in an "or" relationship.

Those skilled in the art will appreciate that, all or part of functions described in one or more of the foregoing implementations can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of the implementations of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

## Claims

1. A data transmission method, being applicable to a terminal, the terminal being configured with a first data radio bearer, DRB, and a second DRB, the first DRB corresponding to one secondary radio link control, RLC, entity, the second DRB corresponding to a plurality of secondary RLC entities, and the method comprising:
receiving (501) a first media access control-control element, MAC CE, and a second MAC CE transmitted by a network device, the first MAC CE indicating to activate or deactivate a packet data convergence protocol, PDCP, duplication corresponding to the second DRB and the second MAC CE indicating a PDCP-duplication activation status of a secondary RLC entity corresponding to the second DRB; and
activating or deactivating (502) the PDCP duplication corresponding to the second DRB according to the first MAC CE or the second MAC CE,
wherein the first MAC CE contains first indication information for each of one or more DRBs, the second MAC CE contains a DRB identity, ID, and second indication information for each of a plurality of secondary RLC entities, the first indication information indicates a PDCP-duplication activation status of a DRB, the second indication information indicates a PDCP-duplication activation status of a secondary RLC entity corresponding to the DRB, and the PDCP-duplication activation status comprises an activation state or a deactivation state.

2. The method of claim 1, wherein:
receiving the first MAC CE and the second MAC CE transmitted by the network device comprises:
receiving the first MAC CE transmitted by the network device, wherein the first MAC CE contains the first indication information indicating a PDCP-duplication activation status of a DRB; and
before receiving the first MAC CE transmitted by the network device, the method further comprises:
receiving (1201) the second MAC CE transmitted by the network device and starting (1202) a timer, wherein the second MAC CE indicates the PDCP-duplication activation status of the secondary RLC entity corresponding to the DRB; and
activating or deactivating the PDCP duplication of the secondary RLC entity corresponding to the DRB according to the first MAC CE or the second MAC CE comprises:
determining (1203) the PDCP-duplication activation status of the secondary RLC entity corresponding to the DRB according to the second MAC CE, when the first MAC CE is received before the timer expires; or
activating or deactivating the PDCP duplication of the secondary RLC entity corresponding to the DRB according to the first MAC CE after the timer expires.

3. The method of claim 1, wherein
receiving the first MAC CE and the second MAC CE transmitted by the network device comprises:
receiving the first MAC CE transmitted by the network device, wherein the first MAC CE contains the first indication information indicating a PDCP-duplication activation status of a DRB;
before receiving the first MAC CE transmitted by the network device, the method further comprises:
receiving the second MAC CE transmitted by the network device, wherein a DRB ID contained in the second MAC CE indicates the DRB;
activating or deactivating the PDCP duplication of the secondary RLC entity corresponding to the DRB according to the first MAC CE or the second MAC CE comprises:
determining the PDCP-duplication activation status of the secondary RLC entity corresponding to the DRB according to the second MAC CE, when the second MAC CE is a second MAC CE most recent to the first MAC CE.

4. The method of claim 1, wherein the first MAC CE contains first indication information for each of one or more DRBs, and the first DRB is the one or more DRBs.

5. A data transmission method, comprising:
determining (601), by a network device, a first media access control-control element, MAC CE, and a second MAC CE, the first MAC CE indicating to activate or deactivate a packet data convergence protocol, PDCP, duplication corresponding to a second data radio bearer, DRB and the second MAC CE indicating a PDCP-duplication activation status of a secondary radio link control, RLC, entity corresponding to the second DRB, a first DRB corresponding to one secondary RLC entity, and the second DRB corresponding to a plurality of secondary RLC entities; and
transmitting (602), by the network device, the first MAC CE and the second MAC CE to a terminal,
wherein the first MAC CE contains first indication information for each of one or more DRBs, the second MAC CE contains a DRB identity, ID, information and second indication information for each of a plurality of secondary RLC entities, the first indication information indicates a PDCP-duplication activation status of a DRB, the second indication information indicates a PDCP-duplication activation status of a secondary RLC entity corresponding to a DRB, and the PDCP-duplication activation status comprises an activation state or a deactivation state.

6. The method of claim 5, wherein the first MAC CE contains first indication information for each of one or more DRBs, and the first DRB is the one or more DRBs.

7. A terminal comprising a processor, a memory, a communication interface, and one or more programs which are stored in the memory and configured to be executed by the processor, and the programs comprising instructions used for performing the method of any of claims 1 to 4.

8. A network device comprising a processor, a memory, a communication interface, and one or more programs which are stored in the memory and configured to be executed by the processor, and the programs comprising instructions used for performing the method of claim 5 or 6.

## Patentansprüche

1. Datenübertragungsverfahren, das auf ein Endgerät anwendbar ist, wobei das Endgerät mit einem ersten Datenfunkträger, DRB, und einem zweiten DRB konfiguriert ist, der erste DRB einer sekundären Funkverbindungssteuerungseinheit, RLC-Einheit, entspricht, der zweite DRB mehreren sekundären RLC-Einheiten entspricht und das Verfahren Folgendes umfasst:
Empfangen (501) eines ersten Medienzugangssteuerungs-Steuerelements, MAC CE, und eines zweiten MAC CE, die durch eine Netzvorrichtung gesendet wurden, wobei das erste MAC CE anzeigt, eine Paketdatenkonvergenzprotokoll-Vervielfältigung, PDCP-Vervielfältigung, die dem zweiten DRB entspricht, zu aktivieren oder zu deaktivieren, und das zweite MAC CE einen PDCP-Vervielfältigungsaktivierungsstatus einer sekundären RLC-Einheit, die dem zweiten DRB entspricht, anzeigt; und
Aktivieren oder Deaktivieren (502) der PDCP-Vervielfältigung, die dem zweiten DRB entspricht, gemäß dem ersten MAC CE oder dem zweiten MAC CE,
wobei das erste MAC CE erste Anzeigeinformationen für jeden von einem oder mehreren DRBs enthält, das zweite MAC CE eine DRB-Identität, DRB-ID, und zweite Anzeigeinformationen für jede von mehreren sekundären RLC-Einheiten enthält, die ersten Anzeigeinformationen einen PDCP-Vervielfältigungsaktivierungsstatus eines DRB anzeigen, die zweiten Anzeigeinformationen einen PDCP-Vervielfältigungsaktivierungsstatus einer sekundären RLC-Einheit, die dem DRB entspricht, anzeigen und der PDCP-Vervielfältigungsaktivierungsstatus einen Aktivierungszustand oder einen Deaktivierungszustand umfasst.

2. Verfahren nach Anspruch 1, wobei
das Empfangen des ersten MAC CE und des zweiten MAC CE, die durch die Netzvorrichtung gesendet wurden, Folgendes umfasst:
Empfangen des ersten MAC CE, das durch die Netzvorrichtung gesendet wurde, wobei das erste MAC CE die ersten Anzeigeinformationen enthält, die einen PDCP-Vervielfältigungsaktivierungsstatus eines DRB anzeigen; und
das Verfahren vor dem Empfangen des ersten MAC CE, das durch die Netzvorrichtung gesendet wurde, ferner Folgendes umfasst:
Empfangen (1201) des zweiten MAC CE, das durch die Netzvorrichtung gesendet wurde, und Starten (1202) eines Zeitgebers, wobei das zweite MAC CE den PDCP-Vervielfältigungsaktivierungsstatus der sekundären RLC-Einheit anzeigt, die dem DRB entspricht; und
das Aktivieren oder das Deaktivieren der PDCP-Vervielfältigung der sekundären RLC-Einheit, die dem DRB entspricht, gemäß dem ersten MAC CE oder dem zweiten MAC CE Folgendes umfasst:
Bestimmen (1203) des PDCP-Vervielfältigungsaktivierungsstatus der sekundären RLC-Einheit, die dem DRB entspricht, gemäß dem zweiten MAC CE, wenn das erste MAC CE empfangen wird, bevor der Zeitgeber abgelaufen ist; oder
Aktivieren oder Deaktivieren der PDCP-Vervielfältigung der sekundären RLC-Einheit, die dem DRB entspricht, gemäß dem ersten MAC CE, nachdem der Zeitgeber abgelaufen ist.

3. Verfahren nach Anspruch 1, wobei
das Empfangen des ersten MAC CE und des zweiten MAC CE, die durch die Netzvorrichtung gesendet wurden, Folgendes umfasst:
Empfangen des ersten MAC CE, das durch die Netzvorrichtung gesendet wurde, wobei das erste MAC CE die ersten Anzeigeinformationen enthält, die einen PDCP-Vervielfältigungsaktivierungsstatus eines DRB anzeigen;
das Verfahren vor dem Empfangen des ersten MAC CE, das durch die Netzvorrichtung gesendet wurde, ferner Folgendes umfasst:
Empfangen des zweiten MAC CE, das durch die Netzvorrichtung gesendet wurde, wobei eine DRB-ID, die im zweiten MAC CE enthalten ist, den DRB anzeigt; und das Aktivieren oder das Deaktivieren der PDCP-Vervielfältigung der sekundären RLC-Einheit, die dem DRB entspricht, gemäß dem ersten MAC CE oder dem zweiten MAC CE Folgendes umfasst:
Bestimmen des PDCP-Vervielfältigungsaktivierungsstatus der sekundären RLC-Einheit, die dem DRB entspricht, gemäß dem zweiten MAC CE, wenn das zweite MAC CE ein jüngstes zweites MAC CE zum ersten MAC CE ist.

4. Verfahren nach Anspruch 1, wobei das erste MAC CE erste Anzeigeinformationen für jeden von einem oder mehreren DRBs enthält und der erste DRB der eine oder die mehreren DRBs ist.

5. Datenübertragungsverfahren, das Folgendes umfasst:
Bestimmen (601) durch eine Netzvorrichtung eines ersten Medienzugangssteuerungs-Steuerelements, MAC CE, und eines zweiten MAC CE, wobei das erste MAC CE anzeigt, eine Paketdatenkonvergenzprotokoll-Vervielfältigung, PDCP-Vervielfältigung, die einem zweiten Datenfunkträger, DRB, entspricht, zu aktivieren oder zu deaktivieren, und das zweite MAC CE einen PDCP-Vervielfältigungsaktivierungsstatus einer sekundären Funkverbindungssteuerungseinheit, RLC-Einheit, anzeigt, die dem zweiten DRB entspricht, wobei ein erster DRB einer sekundären RLC-Einheit entspricht und der zweite DRB mehreren sekundären RLC-Einheiten entspricht; und
Senden (602) durch die Netzvorrichtung des ersten MAC CE und des zweiten MAC CE zu einem Endgerät,
wobei das erste MAC CE erste Anzeigeinformationen für jeden von einem oder mehreren DRBs enthält, das zweite MAC CE DRB-Identitätsinformationen, DRB-ID-Informationen, und zweite Anzeigeinformationen für jede von mehreren sekundären RLC-Einheiten enthält, die ersten Anzeigeinformationen einen PDCP-Vervielfältigungsaktivierungsstatus eines DRB anzeigen,
die zweiten Anzeigeinformationen einen PDCP-Vervielfältigungsaktivierungsstatus einer sekundären RLC-Einheit, die einem DRB entspricht, anzeigen und der PDCP-Vervielfältigungsaktivierungsstatus einen Aktivierungszustand oder einen Deaktivierungszustand umfasst.

6. Verfahren nach Anspruch 5, wobei das erste MAC CE erste Anzeigeinformationen für jeden von einem oder mehreren DRBs enthält und der erste DRB der eine oder die mehreren DRBs ist.

7. Endgerät, das einen Prozessor, einen Speicher, eine Kommunikationsschnittstelle und ein oder mehrere Programme, die im Speicher gespeichert sind und konfiguriert sind, durch den Prozessor ausgeführt zu werden, umfasst, wobei die Programme Befehle umfassen, die zum Durchführen des Verfahrens nach einem der Ansprüche 1 bis 4 verwendet werden.

8. Netzvorrichtung, die einen Prozessor, einen Speicher, eine Kommunikationsschnittstelle und ein oder mehrere Programme, die im Speicher gespeichert sind und konfiguriert sind, durch den Prozessor ausgeführt zu werden, umfasst, wobei die Programme Befehle umfassen, die zum Durchführen des Verfahrens nach Anspruch 5 oder 6 verwendet werden.

## Revendications

1. Procédé de transmission de données, applicable à un terminal, le terminal étant configuré avec une première porteuse radio de données, « Data Radio Bearer » DRB, et une seconde DRB, la première DRB correspondant à une entité secondaire de contrôle de liaison radio, « Radio Link Control » RLC, la seconde DRB correspondant à une pluralité d'entités secondaires de RLC, et le procédé comprenant :
la réception (501) d'un premier élément de contrôle-contrôle d'accès au support, « Media Access Control-Control Element » MAC CE, et d'un second MAC CE transmis par un dispositif de réseau, le premier MAC CE indiquant d'activer ou de désactiver une duplication de protocole de convergence de données par paquets, « Packet Data Convergence Protocol » PDCP, correspondant à la seconde DRB et le second MAC CE indiquant un statut d'activation de duplication de PDCP d'une entité secondaire de RLC correspondant à la seconde DRB ; et
l'activation ou la désactivation (502) de la duplication de PDCP correspondant à la seconde DRB selon le premier MAC CE ou le second MAC CE,
dans lequel le premier MAC CE contient des premières informations d'indication pour chacune d'une ou de plusieurs DRBs, le second MAC CE contient une identité, ID, de DRB, et des secondes informations d'indication pour chacun d'une pluralité d'entités secondaires de RLC, les premières informations d'indication indiquent un statut d'activation de duplication de PDCP d'une DRB, les secondes informations d'indication indiquent un statut d'activation de duplication de PDCP d'une entité secondaire de RLC correspondant à la DRB, et le statut d'activation de duplication de PDCP comprend un état d'activation ou un état de désactivation.

2. Procédé de la revendication 1, dans lequel :
la réception du premier MAC CE et du second MAC CE transmis par le dispositif de réseau comprend :
la réception du premier MAC CE transmis par le dispositif de réseau, dans lequel le premier MAC CE contient les premières informations d'indication indiquant un statut d'activation de duplication de PDCP d'une DRB ; et
avant la réception du premier MAC CE transmis par le dispositif de réseau, le procédé comprend en outre :
la réception (1201) du second MAC CE transmis par le dispositif de réseau et le démarrage (1202) d'une minuterie, dans lequel le second MAC CE indique le statut d'activation de duplication de PDCP de l'entité secondaire de RLC correspondant à la DRB ; et
l'activation ou la désactivation de la duplication de PDCP de l'entité secondaire de RLC correspondant à la DRB selon le premier MAC CE ou le second MAC CE comprend :
la détermination (1203) du statut d'activation de duplication de PDCP de l'entité secondaire de RLC correspondant à la DRB selon le second MAC CE, lorsque le premier MAC CE est reçu avant que la minuterie n'expire ; oul'activation ou la
désactivation de la duplication de PDCP de l'entité secondaire de RLC correspondant à la DRB selon le premier MAC CE après que la minuterie expire.

3. Procédé de la revendication 1, dans lequel
la réception du premier MAC CE et le second MAC CE transmis par le dispositif de réseau comprend :
la réception du premier MAC CE transmis par le dispositif de réseau, dans lequel le premier MAC CE contient les premières informations d'indication indiquant un statut d'activation de duplication de PDCP d'une DRB ;
avant la réception du premier MAC CE transmis par le dispositif de réseau, le procédé comprend en outre :
la réception du second MAC CE transmis par le dispositif de réseau, dans lequel une ID de DRB contenue dans le second MAC CE indique la DRB ;
l'activation ou la désactivation de la duplication de PDCP de l'entité secondaire de RLC correspondant à la DRB selon le premier MAC CE ou le second MAC CE comprend :
la détermination du statut d'activation de duplication de PDCP de l'entité secondaire de RLC correspondant à la DRB selon le second MAC CE, lorsque le second MAC CE est un second MAC CE le plus récent par rapport au premier MAC CE.

4. Procédé de la revendication 1, dans lequel le premier MAC CE contient des premières informations d'indication pour chacune d'une ou de plusieurs DRBs, et la première DRB est l'une ou les plusieurs DRBs.

5. Procédé de transmission de données, comprenant :
la détermination (601), par un dispositif de réseau, un premier élément de contrôle-contrôle d'accès au support, « Media Access Control-Control Element » MAC CE, et un second MAC CE, le premier MAC CE indiquant d'activer ou de désactiver une duplication de protocole de convergence de données par paquets, « Packet Data Convergence Protocol » PDCP, correspondant à une seconde porteuse radio de données, « Data Radio Bearer » DRB, et le second MAC CE indiquant un statut d'activation de duplication de PDCP d'une entité secondaire de contrôle de liaison radio, « Radio Link Control » RLC, correspondant à la seconde DRB, une première DRB correspondant à une entité secondaire de RLC, et la seconde DRB correspondant à une pluralité d'entités secondaires de RLC ; et
la transmission (602), par le dispositif de réseau, du premier MAC CE et du second MAC CE à un terminal,
dans lequel le premier MAC CE contient des premières informations d'indication pour chacune d'une ou de plusieurs DRBs, le second MAC CE contient des informations d'une identité, ID, de DRB, et des secondes informations d'indication pour chacune d'une pluralité de entités secondaires de RLC, les premières informations d'indication indiquent un statut d'activation de duplication de PDCP d'une DRB, les secondes informations d'indication indiquent un statut d'activation de duplication de PDCP d'une entité secondaire de RLC correspondant à une DRB, et le statut d'activation de duplication de PDCP comprend un état d'activation ou un état de désactivation.

6. Procédé de la revendication 5, dans lequel le premier MAC CE contient des premières informations d'indication pour chacune d'une ou de plusieurs DRBs, et la première DRB est l'une ou les plusieurs DRBs.

7. Terminal, comprenant un processeur, une mémoire, une interface de communication, et un ou plusieurs programmes qui sont stockés dans la mémoire et configurés pour être exécutés par le processeur, et les programmes comprenant des instructions utilisées pour réaliser le procédé de quelconques des revendications 1 à 4.

8. Dispositif de réseau, comprenant un processeur, une mémoire, une interface de communication, et un ou plusieurs programmes qui sont stockés dans la mémoire et configurés pour être exécutés par le processeur, et les programmes comprenant des instructions utilisées pour réaliser le procédé de la revendication 5 ou 6.
